# EUROPÄISCHE PATENTANMELDUNG

(11) **EP 1 617 592 A1**
(43) Veröffentlichungstag der Anmeldung: **18.01.2006**
(21) Anmeldenummer: 04016368.5
(22) Anmeldetag: 12.07.2004
(51) Int. Cl.: H04L 12/24

(54) **Verfahren zur Auswahl eines Objektmodells für die Manager-Agent Kommunikation**

(71) Anmelder: SIEMENS AKTIENGESELLSCHAFT, 80333 München (DE)
(72) Erfinder: Hirsch, Lucian, 81373 München (DE)

(57) **Zusammenfassung**

Die Erfindung betrifft ein Verfahren zum Betreiben eines einen Manager (NMC) und einen Agenten (OMC) umfassenden Managementnetzes eines Telekommunikationsnetzes, bei dem der Manager (NMC) und der Agent (OMC) unter Verwendung eines Netzressourcen des Telekommunikationsnetzes als Objektklassen modellierenden Objektmodells (MODEL1, MODEL2, MODEL3) miteinander kommunizieren. Erfindungsgemäß stellt der Agent (OMC) dem Manager (NMC) eine Mehrzahl von Objektmodellen (MODEL1, MODEL2, MODEL3) zur Auswahl zur Verfügung. Weiterhin wählt der Manager (NMC) ein Objektmodell der Mehrzahl von Objektmodellen (MODEL1, MODEL2, MODEL3) aus, und zur Kommunikation zwischen dem Manager (NMC) und dem Agent (OMC) wird das ausgewählte Objektmodell (MODEL1, MODEL2, MODEL3) verwendet.

## Beschreibung

Die Erfindung betrifft ein Verfahren zum Betreiben eines Managementnetzes eines Telekommunikationsnetzes, bei dem ein Manager und ein Agent unter Verwendung eines Netzressourcen des Telekommunikationsnetzes als Objektklassen modellierenden Objektmodells miteinander kommunizieren. Weiterhin betrifft die Erfindung einen Manager und einen Agenten zur Durchführung des Verfahrens.

Gemäß den Prinzipien eines Managementnetzes, auch als TMN-Prinzipien (TMN: Telecommunications Management Network) bezeichnet, existieren mehrere Managementschichten für das Management eines Kommunikationssystems - wie beispielsweise eines Mobilfunkkommunikationssystems -, wobei jede Schicht mit Ausnahme der obersten und untersten Schicht eine doppelte Funktion, nämlich eine Manager- und eine Agentenfunktion besitzt. Im managenden System ("managing system") übt jede Ebene außer der untersten eine Manager-Funktion für die darunterliegende Ebene aus. Im gemanagten System ("managed system") kommt jeder Ebene außer der obersten eine AgentenFunktion für die nächsthöhere Schicht zu.

Manager starten zur Netzüberwachung und -kontrolle Operationen, indem sie sogenannte "requests" versenden, die von Agenten ausgeführt werden, und erhalten entsprechende Rückmeldungen, sogenannte "responses", von den Agenten. Einrichtungen bzw. Elemente des Telekommunikationsnetzes, auch als Ressourcen des Telekommunikationsnetzes bezeichnet, die in einer TMN-Hierarchie die Rolle eines Agenten ausüben, erkennen relevante Ereignisse, sogenannte "events", wie z.B. Alarme, generieren entsprechende Mitteilungen, sogenannte "notifications", und übertragen sie in Form von Ereignismeldungen, sogenannten "event reports", an Manager, um ein effizientes Netzmanagement zu ermöglichen.

Das Netzwerkmanagement kann unter anderem das Fehlermanagement (Fault-Management) und/oder das Konfigurationsmanagement (Configuration Management) und/oder das Sicherheitsmanagement (Security-Management) und/oder das des Abrechnungsmanagement (Accounting-Management) und/oder das Leistungsmanagement (Performance-Management) umfassen. Durch das Netzwerkmanagement sollen geeignete Mechanismen zur Informationsverteilung und -verwaltung bereitgestellt werden, so dass bei Bedarf ein umfassendes Bild über den Netzzustand zur Verfügung steht und die einzelnen Ressourcen des Telekommunikationsnetzes effizient überwacht und konfiguriert werden können.

Die Manager-Agent-Kommunikation erfolgt über sogenannte Management-Schnittstellen bzw. Manager-Agent-Schnittstellen, die in einer objekt-orientierten Umgebung durch ein Kommunikationsprotokoll, wie z.B. CMIP (Common-Management Information Protocol) nach ITU-T X.711 oder CORBA (Common Object Request Broker Architecture), und durch ein Objektmodell gekennzeichnet sind. Objektmodelle dienen der Modellierung von Ressourcen des Telekommunikationsnetzes, wobei diese Ressourcen bei der Modellierung in Objektklassen eingeteilt werden.

Solche Schnittstellen gibt es beispielsweise zwischen einerseits der Netzwerkelementmanagement-Ebene (Network Element Management Level) und andererseits der Netzwerkelement-Ebene (Network Element Level). Ein Beispiel für Netzeinrichtungen dieser Manager-Agent-Schnittstelle stellen die Betriebs- und Wartungszentren (OMC: Operation and Maintenance Center) auf der Seite der Netzwerkelementmanagement-Ebene dar, sowie auf der Seite der Netzwerkelement-Ebene Einrichtungen wie z.B. Basisstationen des Basisstationssystems (BSS: Base Station System) eines GSM Mobilfunknetzes, oder Basisstationen anderer Kommunikationsnetze, beispielsweise NodeB's eines UMTS Mobilfunknetzes (UMTS: Universal Mobile Telecommunication System), oder Funkzugangspunkte eines WLAN-Systems (WLAN: Wireless Local Area Network) beispielsweise gemäß einem der IEEE 802.11-Standards.

Management-Schnittstellen bzw. Manager-Agent-Schnittstellen existieren auch zwischen einerseits der Netzwerkmanagement-Ebene (Network Management Level) und andererseits der Netzwerkelementmanagement-Ebene. Ein Beispiel für Netzeinrichtungen zu dieser Manager-Agent-Schnittstelle stellen die Netzwerkmanagementzentren (NMC: Network Management Center) auf der Seite der Netzwerkmanagement-Ebene und die Betriebs- und Wartungszentren (OMC: Operation and Maintenance Center) auf der Seite der Netzwerkelementmanagement-Ebene z.B. im genannten GSM oder einem anderen Mobilfunk- oder Telekommunikationsnetz dar.

Der Erfindung liegt die Aufgabe zugrunde, ein effizientes Verfahren zum Betreiben eines Managementnetzes der eingangs genannten Art aufzuzeigen. Weiterhin sollen ein geeigneter Manager und ein ebensolcher Agent zur Durchführung des Verfahrens vorgestellt werden.

Diese Aufgabe wird durch ein Verfahren mit den Merkmalen des Patentanspruchs 1, sowie durch einen Manager und einen Agenten mit Merkmalen von nebengeordneten Ansprüchen gelöst. Vorteilhafte Ausgestaltungen und Weiterbildungen sind Gegenstand von Unteransprüchen.

Bei dem erfindungsgemäßen Verfahren zum Betreiben eines Managementnetzes eines Telekommunikationsnetzes kommunizieren ein Manager und ein Agent unter Verwendung eines Objektmodells miteinander, welches Netzressourcen des Telekommunikationsnetzes als Objektklassen modelliert. Erfindungsgemäß stellt der Agent dem Manager eine Mehrzahl von Objektmodellen zur Auswahl zur Verfügung. Der Manager wählt ein Objektmodell aus, und zur Kommunikation zwischen dem Manager und dem Agenten wird das ausgewählte Objektmodell verwendet.

Dem Manager wird von dem Agenten eine Mehrzahl von Objektmodellen zur Auswahl zur Verfügung gestellt. Dies bedeutet, dass dem Manager bekannt ist, z.B. aufgrund einer geeigneten Benachrichtigung durch den Agenten, unter Verwendung welcher Objektmodelle er mit dem Agenten kommunizieren kann. Der Manager wählt eines dieser Objektmodelle aus, wobei die Auswahl dem Agenten auf geeignete Weise mitgeteilt wird. Beispielsweise können die verschiedenen, zur Verfügung stehenden Objektmodelle durch eine Nummer gekennzeichnet sein, und der Manager setzt in einer an den Agenten versendeten Nachricht einen Parameter auf die Nummer des von ihm ausgewählten Objektmodells. Die Auswahl des Objektmodells kann bei laufendem Betrieb der Kommunikation zwischen Manager und Agenten erfolgen, oder nach einem Neustart der Kommunikation zwischen dem Manager und dem Agenten, nachdem die Kommunikation zeitweilig gestört oder unterbrochen war, oder auch periodisch in bestimmten Zeitabständen.

In Weiterbildung der Erfindung stellt der Agent zumindest ein standardisiertes Objektmodell und ein Objektmodell mit nur teilweise standardisierten Objektklassen zur Verfügung. Somit kann sich der Manager entscheiden, ob er ausschließlich standardisierte Objektklassen, oder standardisierte und nicht standardisierte Objektklassen verwenden möchte. Bei dem standardisierten Objektmodell kann es sich zum Beispiel um ein von dem Standardisierungsgremium 3GPP SA5 standardisiertes Objektmodell handeln.

Vorteilhaft ist es, wenn aufgrund der Auswahl des Managers das zur Kommunikation zwischen dem Manager und dem Agenten verwendete Objektmodell gewechselt wird. Das erfindungsgemäße Verfahren kann somit zum dynamischen Wechsel von dem zur Kommunikation zwischen Manager und Agenten verwendeten Objektmodell eingesetzt werden.

Einer Ausgestaltung der Erfindung gemäß speichert der Agent für jedes zur Verfügung gestellte Objektmodell Informationen zur Umwandlung von von einer ihm gegenüber als Agent fungierenden Einrichtung, wie z.B. von Netzelementen, empfangenen Nachrichten in Nachrichten des jeweiligen Objektmodells. Diese Informationen können zum Beispiel in Form von Mapping-Tabellen gespeichert werden, wobei für jedes zur Verfügung gestellte Objektmodell eine solche Tabelle vorhanden ist. Bei Empfang einer Nachricht von einem ihm untergeordneten Agenten kann der Agent der jeweiligen Tabelle entnehmen, auf welche Weise die an den Manager weiterzuleitende Nachricht in das jeweilige Objektmodell übertragen werden kann.

In Weiterbildung der Erfindung kommuniziert der Agent mit dem Manager unter Verwendung des von dem Manager ausgewählten Objektmodells und mit einem anderen Manager unter Verwendung eines anderen von dem anderen Manager ausgewählten Objektmodells. Diese beiden Kommunikationen können insbesondere gleichzeitig stattfinden.

Der erfindungsgemäße Agent für ein Managementnetz eines Telekommunikationsnetzes weist auf:
Mittel zum Kommunizieren mit einem Manager unter Verwendung eines Netzressourcen des Telekommunikationsnetzes als Objektklassen modellierenden Objektmodells,
Mittel zum zur Verfügung Stellen einer Mehrzahl von Objektmodellen zur Auswahl an den Manager,
Mittel zum Empfangen von Informationen über eine Auswahl eines Objektmodells der Mehrzahl von Objektmodellen von dem Manager, und
Mittel zum Kommunizieren mit dem Manager unter Verwendung des vom Manager ausgewählten Objektmodells.

Der erfindungsgemäße Manager für ein Managementnetz eines Telekommunikationsnetzes weist auf:
Mittel zum Kommunizieren mit einem Agenten unter Verwendung eines Netzressourcen des Telekommunikationsnetzes als Objektklassen modellierenden Objektmodells,
Mittel zum Auswählen eines Objektmodells aus einer Mehrzahl von vom Agenten zur Verfügung gestellten Objektmodellen, Mittel zum Kommunizieren mit dem Agenten unter Verwendung des ausgewählten Objektmodells.

Sowohl der erfindungsgemäße Agent, als auch der erfindungsgemäße Manager eignen sich insbesondere zur Durchführung des erfindungsgemäßen Verfahrens, wobei dies auch auf die Ausgestaltungen und Weiterbildungen zutrifft. Hierzu können sie weitere geeignete Mittel aufweisen.

Im folgenden wird die Erfindung anhand eines Ausführungsbeispiels näher erläutert. Dabei zeigen:
- Figur 1:: einen Ausschnitt aus einem Managementnetz eines Mobilfunkkommunikationssystems,
- Figur 2:: eine Darstellung eines Teils eines ersten Objektmodells,
- Figur 3:: eine Darstellung eines Teils eines zweiten Objektmodells.

Die Erfindung wird im folgenden erläutert anhand eines Managementnetzes eines Mobilfunkkommunikationssystems. Dieses umfasst auf der untersten Managementebene, d.h. der Netzwerkelementebene, eine Mehrzahl an Netzelementen NE1 bis NEx, wobei es sich bei einem der Netzelemente um eine Einrichtung zur Kontrolle von Basisstationen BSC#17 (BSC: Base Station Controller) handelt. Die Netzelemente NE1 bis NEx sind als Agenten an ein Betriebs- und Wartungszentrum OMC der Netzwerkelementmanagement-Ebene angeschlossen, welches ihnen gegenüber als Manager fungiert. Das Betriebs- und Wartungszentrum OMC ist als Agent an ein Managementzentrum NMC der Netzwerkmanagement-Ebene angeschlossen.

Eine Managementschnittstelle zwischen einem Manager und einem Agenten ist u.a. durch das für die Kommunikation verwendete Objektmodell gekennzeichnet, welches der Modellierung von Ressourcen des Telekommunikationsnetzes bzw. deren Einteilung in bestimmte Objektklassen dient. Für die Managementschnittstelle zwischen dem Betriebs- und Wartungszentrum OMC und dem Managementzentrum NMC existiert ein von dem Standardisierungsgremium 3GPP SA5 definiertes Objektmodell. Dieses Objektmodell kann dadurch erweitert werden, dass Objektklassen, so genannte "Vendor specific Data Container", hinzugefügt werden, welche sich von Objektklassen des standardisierten Objektmodells um ein oder mehrere Attribute unterscheiden. Zusätzlich oder alternativ ist es möglich, das standardisierte Objektmodell durch das Hinzufügen von neuen Objektklassen bzw. Unterklassen zu Objektklassen des standardisierten Objektmodells zu modifizieren.

Erfindungsgemäß ist das Betriebs- und Wartungszentrum OMC in der Lage, mit dem Managementzentrum NMC unter Verwendung von verschiedenen Objektmodellen MODEL1, MODEL2 und MODEL3 zu kommunizieren, wobei es sich bei dem ersten Objektmodell MODEL1 z.B. um ein von dem Standardisierungsgremium 3GPP SA5 definiertes Objektmodell, bei dem zweiten Objektmodell MODEL2 um ein um Vendor specific Data Container ergänztes, und bei dem dritten Objektmodell MODEL3 um ein um Vendor specific Data Container und/oder herstellerspezifische Klassen ergänztes Objektmodell handeln kann.

Das auf der Managementschnittstelle zwischen den Netzelementen NE1 bis NEx und dem Betriebs- und Wartungszentrum OMC verwendete Objektmodell unterscheidet sich von dem auf der Managementschnittstelle zwischen dem Betriebs- und Wartungszentrum OMC und dem Managementzentrum NMC verwendeten Objektmodell MODEL1, MODEL2 oder MODEL3. Daher führt das Betriebs- und Wartungszentrum OMC eine Umwandlung von von Netzelementen NE1 bis NEx empfangenen Notifications des Objektmodells der Netzelement-OMC Schnittstelle in Notifications der OMC-NMC Schnittstelle durch (so genanntes Mapping). Hierzu weist das Betriebs- und Wartungszentrum OMC geeignete Tabellen zur Umwandlung zwischen den verschiedenen Objektmodellen auf, durch Tabellen über den Objektmodellen MODEL1, MODEL2 und MODEL3 symbolisiert, welche die zur Umwandlung der Notifications erforderlichen Korrelationen zwischen den jeweiligen Objektmodellen bzw. ihren Objektklassen aufweisen.

Das Managementzentrum NMC wählt eines der Objektmodelle MODEL1, MODEL2 oder MODEL3, welche ihm vom Betriebs- und Wartungszentrum OMC zur Verfügung gestellt werden, aus und benachrichtigt das Betriebs- und Wartungszentrum OMC über diese Auswahl. Das vom Managementzentrum NMC ausgewählte Objektmodell MODEL1, MODEL2 oder MODEL3 wird dann zur Kommunikation zwischen dem Managementzentrum NMC und dem Betriebs- und Wartungszentrum OMC verwendet. Diese Auswahl kann z.B. dadurch erfolgen, dass nach jeder Wiederherstellung der Kommunikation zwischen dem Betriebs- und Wartungszentrum OMC und dem Managementzentrum NMC vom Managementzentrum NMC eine Liste aller vom Betriebs- und Wartungszentrum OMC zur Verfügung gestellten Objektmodelle abgefragt und ausgewertet wird. Anschließend sendet das Managementzentrum NMC eine Anforderung an das Betriebs- und Wartungszentrum OMC, welche eine Kennung des ausgewählten Objektmodells beinhaltet. Es ist auch möglich, dass ein derartiger Auswahlvorgang periodisch erfolgt.

In der Regel existieren in einem Mobilfunkkommunikationssystem eine Mehrzahl an Managementzentren NMC, welche verschiedne Managementfunktionen bzw. -aufgaben erfüllen. Bei der OMC-NMC Schnittstelle liegt in diesem Fall eine "Multi-Manager" Konfiguration vor, bei welcher mehrere Managementzentren NMC an ein Betriebs- und Wartungszentrum OMC angeschlossen sein können. In der Regel unterscheidet sich die Eignung eines Objektmodells für die Kommunikation zwischen einem Betriebs- und Wartungszentrum OMC und einem Managementzentrum NMC für unterschiedlich Managementaufgaben unterschiedlich gut. Unter Verwendung des erfindungsgemäßen Verfahrens kann der Betreiber eines Managementzentrums NMC dasjenige Objektmodell verwenden, welches der jeweiligen Funktion des Managementzentrums NMC am ehesten entspricht. Sind mehrere Managementzentren NMC an ein Betriebs- und Wartungszentrum OMC angeschlossen, so können diese unterschiedliche Objektmodelle auswählen.

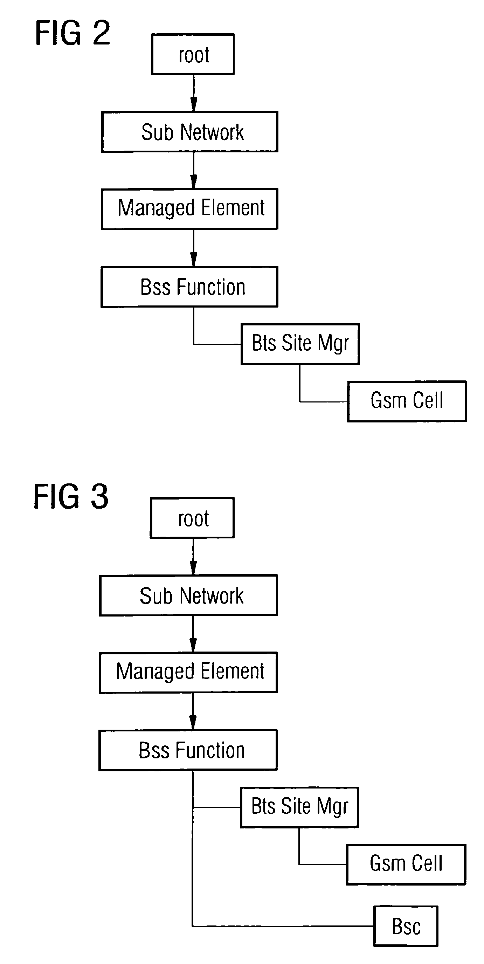

Es wird beispielhaft der Fall betrachtet, dass das Managementzentrum NMC das gemäß 3GPP SA5 standardisierte Objektmodell zur Kommunikation mit dem Betriebs- und Wartungszentrum OMC ausgewählt hat. Figur 2 zeigt beispielhaft einige Objektklassen root, SubNetwork, ManagedElement, BssFunction, BtsSiteMgr und GsmCell dieses Objektmodells. Die Objektklasse BtsSiteMgr, welche die Managementfähigkeit mehrerer, an einem Standort stehender Basisstationen (BTS: Base Transceiver Station) modelliert, ist als Unterklasse in der Objektklasse BssFunction enthalten (so genanntes "containment relationship"). Die Objektklasse BtsSiteMgr wiederum enthält die Objektklasse GsmCell, welche die Funktionalität einer Funkzelle eines GSM-Netzes modelliert.

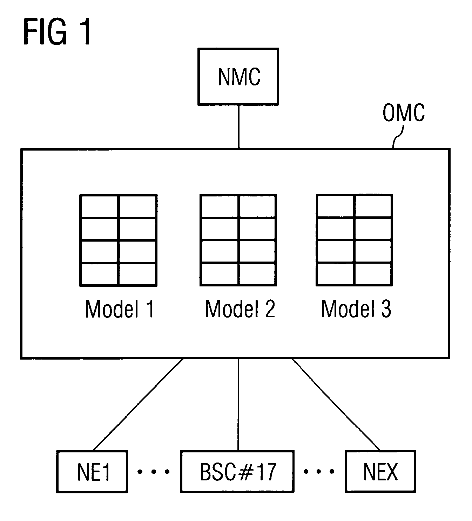

Es wird der Fall betrachtet, dass das Netzelement BSC#17 der Figur 1 eine Alarm-Notification generiert mit den Parametern MOC (Managed Object Class) gleich Bsc und MOI (Managed Object Instance) gleich 17. Der Parameter MOC gibt hierbei die Objektklasse des Netzelementes BSC#17 gemäß dem Objektmodell der Schnittstelle zwischen dem Netzelement BSC#17 und dem Betriebs- und Wartungszentrum OMC an, während der Parameter MOI das Netzelement BSC#17 innerhalb dieser Objektklasse identifiziert.

Das Betriebs- und Wartungszentrum OMC empfängt die Alarm-Notification und erkennt anhand der gespeicherten, aufgrund der Auswahl des Managementzentrums NMC aktuell zu verwendenden Mapping-Tabelle, dass für die Versendung der Notification an das Managementzentrum NMC eine Umwandlung der Notification auf die MOI mit beispielsweise der Nummer 123 der MOC BssFunction entsprechend dem vom Managementzentrum NMC ausgewählten Objektmodell zu erfolgen hat. Eine BSC-ähnliche Objektklasse ist gemäß dem Objektmodell der Figur 2 nicht definiert, die nächst höhere Objektklasse BssFunction umfasst die gesamte Funktionalität eines Basisstationssubsystems, welches u.a. auch die BSC's umfasst. Im Parameter "Additional text" der umgewandelten Notification mit MOC = BssFunction, MOI = 123 werden die Parameter MOC/MOI (BSC/#17) des ursprünglichen Alarms eingetragen. Die umgewandelte Notification wird an das Managementzentrum NMC gesendet.

Figur 3 zeigt beispielhaft die Objektklassen root, SubNetwork, ManagedElement, BssFunction, BtsSiteMgr, GsmCell und Bsc eines gegenüber dem Objektmodell der Figur 2 erweiterten Objektmodells. Das Objektmodell der Figur 2 wurde um die nicht standardisierte Klasse Bsc, welche in der Objektklasse BssFunction enthalten ist, ergänzt. Die neue Objektklasse Bsc dient der Modellierung der Funktion eines BSC. Wählt das Managementzentrum NMC für die Kommunikation mit dem Betriebs- und Wartungszentrum OMC ein Objektmodell gemäß Figur 3, so findet bei Empfang der oben genannten Alarm-Notification des Netzelementes BSC#17 im Betriebs- und Wartungszentrum OMC eine Umwandlung in die Objektklasse Bsc und beispielsweise eine entsprechende Instanz #245 statt. Von Vorteil bei Verwendung der Objektklasse Bsc ist, dass das Managementzentrum NMC anhand der empfangenen Alarm-Notification unmittelbar eine Angabe über die Ursache des Netzereignisses erhält, bzw. sofort erkennen kann, dass es sich um einen BSC-Ausfall handelt. Die vom Managementzentrum NMC empfangene Information weist somit eine höhere Granularität auf als im Fall der Figur 2.

Andererseits ist die Verwendung von erweiterten Objektmodellen nicht grundsätzlich für alle Managementzentren NMC vorteilhaft, da diese Erweiterung einen zusätzlichen Integrationsaufwand für das jeweilige Managementzentrum NMC erzeugt, d.h. die NMC-Anwendung muss nicht nur die standardisierten, sondern auch die von einem Hersteller zusätzlich definierten Objektklassen implementieren.

Daher existieren in der Regel verschiedene Managementzentren NMC, welche verschiedene Objektmodelle verwenden, und es existieren Managementzentren NMC, welche zu verschiedenen Zeiten verschiedene Objektmodelle verwenden wollen. Durch das erfindungsgemäße Verfahren kann ein Betriebs- und Wartungszentrum OMC diesen unterschiedlichen Anforderungen gerecht werden.

Während das erfindungsgemäße Verfahren anhand einer OMC-NMC Schnittstelle erläutert wurde, ist es auch auf andere Managementschnittstellen anwendbar. Das Verfahren ist unabhängig vom verwendeten Kommunikationsprotokoll an der Manager-Agent Schnittstelle einsetzbar. Weiterhin ist es außer in Mobilfunkkommunikationssystemen für verschiedenste Telekommunikationsnetze verwendbar.

## Patentansprüche

1. Verfahren zum Betreiben eines einen Manager (NMC) und einen Agenten (OMC) umfassenden Managementnetzes eines Telekommunikationsnetzes,
bei dem der Manager (NMC) und der Agent (OMC) unter Verwendung eines Netzressourcen des Telekommunikationsnetzes als Objektklassen (root, SubNetwork, ManagedElement, BssFunction, BtsSiteMgr, GsmCell, Bsc) modellierenden Objektmodells (MODEL1, MODEL2, MODEL3) miteinander kommunizieren,
**dadurch gekennzeichnet,**
**dass** der Agent (OMC) dem Manager (NMC) eine Mehrzahl von Objektmodellen (MODEL1, MODEL2, MODEL3) zur Auswahl zur Verfügung stellt,
**dass** der Manager (NMC) ein Objektmodell der Mehrzahl von Objektmodellen (MODEL1, MODEL2, MODEL3) auswählt, und dass zur Kommunikation zwischen dem Manager (NMC) und dem Agent (OMC) das ausgewählte Objektmodell (MODEL1, MODEL2, MODEL3) verwendet wird.

2. Verfahren nach Anspruch 1,
**dadurch gekennzeichnet,**
**dass** der Agent (OMC) zumindest
ein standardisiertes Objektmodell (MODEL1), und
ein Objektmodell (MODEL2, MODEL3) mit nur teilweise standardisierten Objektklassen (root, SubNetwork, ManagedElement, BssFunction, BtsSiteMgr, GsmCell, Bsc) zur Verfügung stellt.

3. Verfahren nach Anspruch 1 oder 2,
**dadurch gekennzeichnet,**
**dass** aufgrund der Auswahl des Managers (NMC) das zur Kommunikation zwischen dem Manager (NMC) und dem Agent (OMC) verwendete Objektmodell (MODEL1, MODEL2, MODEL3) gewechselt wird.

4. Verfahren nach einem der Ansprüche 1 bis 3,
**dadurch gekennzeichnet,**
**dass** der Agent (OMC) für jedes zur Verfügung gestellte Objektmodell (MODEL1, MODEL2, MODEL3) Informationen zur Umwandlung von von einer ihm gegenüber als Agent fungierenden Einrichtung (BSC#17) empfangenen Nachrichten in Nachrichten des jeweiligen Objektmodells (MODEL1, MODEL2, MODEL3) speichert.

5. Verfahren nach einem der Ansprüche 1 bis 4,
**dadurch gekennzeichnet,**
**dass** der Agent (OMC) mit dem Manager (NMC) unter Verwendung des von dem Manager (NMC) ausgewählten Objektmodells (MODEL1, MODEL2, MODEL3) und mit einem anderen Manager unter Verwendung eines anderen von dem anderen Manager ausgewählten Objektmodells (MODEL1, MODEL2, MODEL3) kommuniziert.

6. Agent (OMC) für ein Managementnetz eines Telekommunikationsnetzes,
mit Mitteln zum Kommunizieren mit einem Manager (NMC) unter Verwendung eines Netzressourcen des Telekommunikationsnetzes als Objektklassen (root, SubNetwork, ManagedElement, BssFunction, BtsSiteMgr, GsmCell, Bsc) modellierenden Objektmodells (MODEL1, MODEL2, MODEL3),
**dadurch gekennzeichnet,**
**dass** der Agent (OMC) aufweist:
Mittel zum zur Verfügung Stellen einer Mehrzahl von Objektmodellen (MODEL1, MODEL2, MODEL3) zur Auswahl an den Manager (NMC),
Mittel zum Empfangen von Informationen über eine Auswahl eines Objektmodells (MODEL1, MODEL2, MODEL3) der Mehrzahl von Objektmodellen (MODEL1, MODEL2, MODEL3) von dem Manager (NMC),
Mittel zum Kommunizieren mit dem Manager (NMC) unter Verwendung des vom Manager (NMC) ausgewählten Objektmodells (MODEL1, MODEL2, MODEL3).

7. Manager (NMC) für ein Managementnetz eines Telekommunikationsnetzes,
mit Mitteln zum Kommunizieren mit einem Agenten (OMC) unter Verwendung eines Netzressourcen des Telekommunikationsnetzes als Objektklassen (root, SubNetwork, ManagedElement, BssFunction, BtsSiteMgr, GsmCell, Bsc) modellierenden Objektmodells (MODEL1, MODEL2, MODEL3),
**dadurch gekennzeichnet,**
**dass** der Manager (NMC) aufweist:
Mittel zum Auswählen eines Objektmodells (MODEL1, MODEL2, MODEL3) aus einer Mehrzahl von vom Agenten (OMC) zur Verfügung gestellten Objektmodellen (MODEL1, MODEL2, MODEL3),
Mittel zum Kommunizieren mit dem Agenten (OMC) unter Verwendung des ausgewählten Objektmodells (MODEL1, MODEL2, MODEL3) .
